# EUROPÄISCHE PATENTANMELDUNG

(11) **EP 4 191 833 A1**
(43) Veröffentlichungstag der Anmeldung: **07.06.2023**
(21) Anmeldenummer: 22209729.7
(22) Anmeldetag: 25.11.2022
(51) Int. Cl.: H02K 1/24, H02K 1/32, H02K 3/24, H02K 9/19

(54) **ROTOR FÜR EINE ELEKTRISCHE MASCHINE MIT EINEM IN EINER ENDPLATTE VERLAUFENDEN KÜHLKANAL**

(30) Priorität: 06.12.2021 DE 102021213810
(71) Anmelder: Valeo eAutomotive Germany GmbH, 91056 Erlangen (DE)
(72) Erfinder: Siepker, Carsten, 97616 Bad Neustadt a.d.Saale (DE); Bach, Regina, 97616 Bad Neustadt a.d.Saale (DE); Wieczorek, Christoph, 97616 Bad Neustadt a.d.Saale (DE); Wolf, Nico, 97616 Bad Neustadt a.d.Saale (DE); Schlereth, Alexander, 97616 Bad Neustadt a.d.Saale (DE)
(74) Vertreter: Valeo Powertrain Systems

(57) **Zusammenfassung**

Rotor (1, 18) für eine elektrische Maschine (24), umfassend eine Rotorwelle (3), ein auf der Rotorwelle (3) angeordnetes, aus gestapelten Elektroblechen gebildetes Blechpaket (2), eine an einer Axialseite des Blechpakets (2) angeordnete erste Endplatte (4) mit entlang ihres Umfanges angeordneten radialen Vorsprüngen (5), eine an der gegenüberliegenden Axialseite des Blechpakets (2) angeordnete zweite Endplatte (6) mit entlang ihres Umfanges angeordneten radialen Vorsprüngen (7), mehrere Rotorwicklungen (8), die jeweils um einen Vorsprung (5) der ersten Endplatte (4) und einen axial gegenüberliegenden Vorsprung (7) der zweiten Endplatte (6) gewunden sind, einen in der Rotorwelle (3) verlaufenden zentralen Kühlkanal (10) zum Zuführen eines Kühlmittels und einen in der ersten Endplatte (4) verlaufenden peripheren Kühlkanal (11), der sich von dem zentralen Kühlkanal (10) nach außen erstreckt.

## Beschreibung

Die Erfindung betrifft einen Rotor für eine elektrische Maschine, eine elektrische Maschine mit einem Rotor und ein Fahrzeug mit einer elektrischen Maschine.

Der Rotor weist eine Rotorwelle und ein auf der Rotorwelle angeordnetes, aus gestapelten Elektroblechen gebildetes Blechpaket auf. Der Rotor gehört gemeinsam mit einem Stator zu einer elektrischen Maschine.

Elektrische Maschinen dieser Art werden in zunehmendem Maße in elektrisch angetriebenen Fahrzeugen und Hybridfahrzeugen verwendet, überwiegend als Elektromotoren für den Antrieb eines Rads oder einer Achse eines derartigen Fahrzeugs.

Ein solcher Elektromotor ist zumeist mechanisch mit einem Getriebe zur Drehzahlanpassung gekoppelt. Daneben ist der Elektromotor in der Regel elektrisch mit einem Wechselrichter gekoppelt, der aus einer von einer Batterie gelieferten Gleichspannung eine Wechselspannung für den Betrieb des Elektromotors erzeugt, beispielsweise eine mehrphasige Wechselspannung.

Es ist auch möglich, eine elektrische Maschine mit einem derartigen Rotor als Generator zur Rekuperation von Bewegungsenergie eines Fahrzeugs zu betreiben. Hierzu wird die Bewegungsenergie zunächst in elektrische Energie und dann in chemische Energie einer Fahrzeugbatterie umgewandelt.

Bei einer bestimmten Bauart von elektrisch erregten Synchronmotoren (EESM) besitzt der Rotor Rotorwicklungen, die mit Gleichstrom gespeist werden, um ein magnetisches Erregerfeld zu erzeugen. Wenn mit den Statorwicklungen eines zugehörigen Stators ein Drehfeld erzeugt wird, bewirkt das eine Kraftwirkung auf den Rotor, sodass dieser synchron zum Statordrehfeld rotiert.

Die Rotorwicklungen werden dabei allerdings stark erwärmt, sodass eine Kühlung erforderlich ist. Die Kühlung kann beispielsweise durch Aufsprühen von Öl auf die Axialseiten des Rotors erfolgen. Allerdings wirkt diese Art der Kühlung nur oberflächlich und ist deshalb wenig effektiv.

Der Erfindung liegt daher die Aufgabe zugrunde, einen Rotor für eine elektrische Maschine anzugeben, der während des Betriebs besser gekühlt werden kann.

Zur Lösung dieser Aufgabe ist ein Rotor mit den Merkmalen des Anspruchs 1 vorgesehen.

Der erfindungsgemäße Rotor umfasst eine an einer Axialseite des Blechpakets angeordnete erste Endplatte mit entlang ihres Umfanges angeordneten radialen Vorsprüngen, eine an der gegenüberliegenden Axialseite des Blechpakets angeordnete zweite Endplatte mit entlang ihres Umfanges angeordneten radialen Vorsprüngen, mehrere Rotorwicklungen, die jeweils um einen Vorsprung der ersten Endplatte und einen axial gegenüberliegenden Vorsprung der zweiten Endplatte gewunden sind, einen in der Rotorwelle verlaufenden zentralen Kühlkanal zum Zuführen eines Kühlmittels und einen in der ersten Endplatte verlaufenden peripheren Kühlkanal, der sich von dem zentralen Kühlkanal nach außen erstreckt.

Die Erfindung beruht auf der Erkenntnis, dass eine verbesserte Kühlung erzielt werden kann, indem das Kühlmittel durch einen in der Rotorwelle ausgebildeten zentralen Kühlkanal zugeführt wird. Von dort gelangt das Kühlmittel durch einen in der ersten Endplatte verlaufenden peripheren Kühlkanal nach außen. Auf diese Weise wird einerseits das Blechpaket durch den direkten Kontakt mit der Rotorwelle gekühlt. Daneben werden auch Bereiche des Blechpakets und der Rotorwicklungen an der ersten Endplatte gekühlt. Insgesamt kann auf diese Weise eine wesentlich zentralere und damit bessere Kühlung erzielt werden als mit dem oben erwähnten Besprühen der Axialseiten.

Die entlang ihres des Umfanges angeordneten radialen Vorsprüngen einer Endplatte können auch als "Zähne" oder "Plattenfortsätze" bezeichnet werden und dienen unter anderem zum Halten der Rotorwicklungen in einer festlegten Position.

Anstelle nur eines peripheren Kühlkanals können in der ersten Endplatte auch mehrere periphere Kühlkanäle verlaufen, die sich jeweils von dem zentralen Kühlkanal nach außen erstrecken.

Bei dem erfindungsgemäßen Rotor wird es bevorzugt, dass der periphere Kühlkanal radial verläuft. Vorzugsweise können ausgehend von dem zentralen Kühlkanal mehrere periphere Kühlkanäle radial, das heißt sternförmig, abzweigen und an der Außenseite des Rotors münden. Beispielsweise können zwei, vier, sechs, acht oder zwölf derartige periphere radiale Kühlkanäle vorhanden sein. Insbesondere kann die Anzahl der in der Endplatte vorgesehenen peripheren Kühlkanäle einer Anzahl von Polen des Rotors entsprechen.

In weiterer Ausgestaltung der Erfindung kann es vorgesehen sein, dass der periphere Kühlkanal in einem Vorsprung beziehungsweise Plattenfortsatz der Endplatte verläuft. Vorzugsweise können mehrere von dem zentralen Kühlkanal ausgehende periphere Kühlkanäle jeweils durch einen anderen Vorsprung der Endplatte verlaufen. Auf diese Weise kann insbesondere der äußere Bereich des Blechpakets gekühlt werden.

Vorzugsweise mündet der periphere Kühlkanal in einem am Umfang des Rotors angeordneten Auslass. Bei mehreren peripheren Kühlkanälen können entsprechend mehrere über den Umfang verteilt angeordnete Auslässe vorhanden sein, die jeweils zu einem anderen peripheren Kühlkanal gehören können. Vorzugsweise befindet sich ein solcher Auslass am Ende eines radial verlaufenden Kühlkanals. Das Kühlmittel, beispielsweise ein Öl, verlässt den Rotor durch die Auslässe und kann beispielsweise in einem Ölsumpf gesammelt werden, von wo es in einem Kreislauf dem Rotor wieder durch die Rotorwelle zugeführt werden kann.

Bei einer Ausführungsform der Erfindung ist die erste Endplatte axial mit einer Abdeckung abgedeckt, in welcher der Auslass mündet. Die Abdeckung kann unter anderem zum Schützen der Spulenwicklungen und Stabilisieren des Rotors dienen.

Eine Variante der Erfindung sieht vor, dass der Auslass einen axial verlaufenden Abschnitt aufweist. Auf diese Weise kann der Auslass an einer passenden Axialposition des Rotors münden. Der axial verlaufende Abschnitt bildet vorzugsweise eine Fortsetzung des Kühlkanals und bewirkt eine Kühlung der radialen Vorsprünge der Endplatten.

Eine Ausführung des erfindungsgemäßen Rotors sieht vor, dass der periphere Kühlkanal von der ersten Endplatte allein gebildet ist. Der periphere Kühlkanal kann dazu als ein von der ersten Endplatte umschlossener Hohlraum gebildet sein. Eine alternative Ausführung des erfindungsgemäßen Rotors sieht vor, dass der periphere Kühlkanal von der ersten Endplatte und dem Blechpaket gemeinsam gebildet ist. Die erste Endplatte kann dazu eine radiale Nut aufweisen, die an einer axialen Seitenfläche des Blechpakets abgedeckt wird. Damit lässt sich der periphere Kühlkanal besonders einfach herstellen und es wird eine gute Kühlung der Außenseite des Blechpakets erzielt.

Eine besonders bevorzugte Variante der Erfindung sieht vor, dass der periphere Kühlkanal kurvenförmig verläuft. Der periphere Kühlkanal kann beispielsweise S-förmig oder mäanderförmig ausgebildet sein. Auf diese Weise wird der periphere Kühlkanal verlängert, wodurch sich eine verbesserte Wärmeabführung ergibt.

Eine noch bessere Kühlung kann erzielt werden, wenn in der zweiten Endplatte ein weiterer peripherer Kühlkanal verläuft, der sich von dem zentralen Kühlkanal nach außen erstreckt, wobei der weitere periphere Kühlkanal radial nach außen verlaufen kann. Vorzugsweise entspricht der weitere periphere Kühlkanal hinsichtlich seiner Gestalt und Anordnung dem in der esrten Endplatte verlaufenden Kühlkanal. Durch die beiden peripheren Kühlkanäle können beide Axialseiten des Blechpakets ausreichend gekühlt werden.

Anstelle nur eines peripheren Kühlkanals können in der zweiten Endplatte mehrere periphere Kühlkanäle verlaufen, die sich jeweils von dem zentralen Kühlkanal nach außen erstrecken. Diese peripheren Kühlkanäle können hinsichtlich ihrer Gestalt und Anordnung den in der ersten Endplatte verlaufenden Kühlkanälen entsprechen.

Bei dem erfindungsgemäßen Rotor können die erste Endplatte und/oder die zweite Endplatte jeweils eine Metalllegierung aufweisen, vorzugsweise eine Aluminiumlegierung. In diesem Fall können die Endplatten jeweils mit einem elektrisch nichtleitenden Werkstoff wie Kunststoff beschichtet sein. Alternativ dazu können die Endplatten jeweils aus einem elektrisch nichtleitenden Material bestehen, beispielsweise aus Kunststoff.

Daneben betrifft die Erfindung eine elektrische Maschine mit einem Rotor der beschriebenen Art und einem Stator, gegenüber dem der Rotor drehbar ist. Der Stator kann ein weiteres Blechpaket (Statorpaket) aufweisen, das aus gestapelten Elektroblechen gebildet ist. Daneben kann der Stator Wicklungen elektrischer Leiter besitzen, zum Beispiel in Form von Spulenwicklungen oder Flachdrahtwicklungen.

Ferner betrifft die Erfindung ein Fahrzeug mit einer derartigen elektrischen Maschine, die zum Antreiben des Fahrzeugs vorgesehen ist. Die Maschine kann insbesondere ein Rad oder eine Achse des Fahrzeugs antreiben.

Die Erfindung wird nachfolgend anhand eines Ausführungsbeispiels unter Bezugnahme auf die Figuren erläutert. Die Figuren sind schematische Darstellungen und zeigen:
- Fig. 1: eine geschnittene Seitenansicht eines erfindungsgemäßen Rotors gemäß einem ersten Ausführungsbeispiel,
- Fig. 2: einen Schnitt entlang der Linie II-II von Figur 1,
- Fig. 3: eine geschnittene Seitenansicht eines erfindungsgemäßen Rotors gemäß einem zweiten Ausführungsbeispiel, und
- Fig. 4: ein erfindungsgemäßes Fahrzeug mit einer elektrischen Maschine mit dem Rotor.

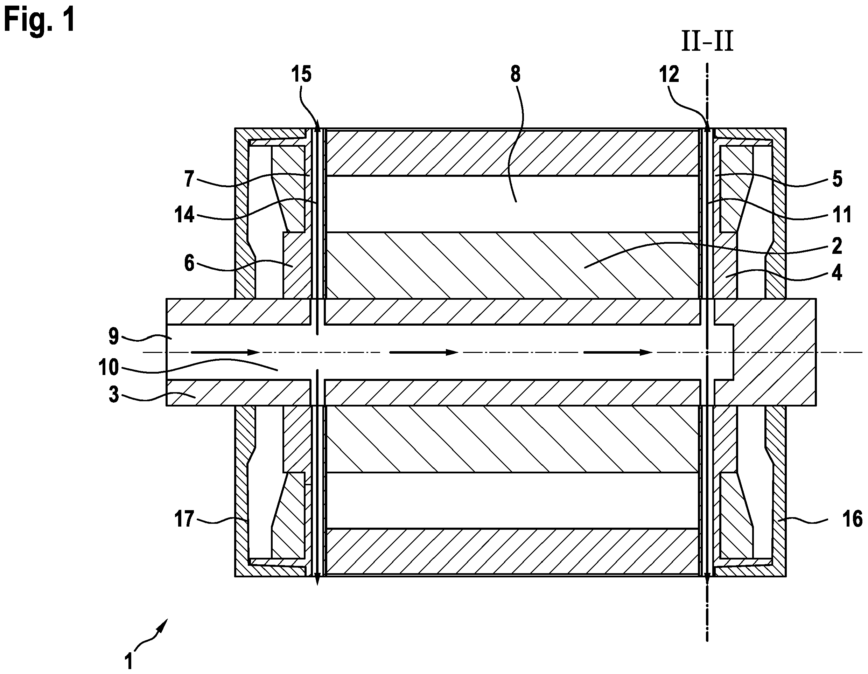

Der in Figur 1 in einer geschnittenen Seitenansicht gezeigte Rotor 1 ist für eine elektrische Maschine vorgesehen und umfasst ein aus gestapelten Elektroblechen gebildetes zylinderförmiges Blechpaket 2. Das Blechpaket 2 umschließt eine Rotorwelle 3 form- und/oder kraftschlüssig. Bei den Elektroblechen kann es sich um identisch ausgebildete Stanzteile handeln.

An einer ersten Axialseite des Blechpakets 2 befindet sich eine erste Endplatte 4, die entlang ihres Umfangs radiale Vorsprünge 5 aufweist, welche auch als "Plattenfortsätze" bezeichnet werden. An der entgegengesetzten zweiten Axialseite befindet sich eine zweite Endplatte 6, die entlang ihres Umfangs entsprechende radiale Vorsprünge 7 aufweist. Beide Endplatten 4, 6 weisen jeweils einen Aluminiumkern auf, der mit Kunststoff umspritzt ist. Um die radialen Vorsprünge 5, 7 der Endplatten 4, 6 sind Rotorwicklungen 8 gewunden.

Die Rotorwelle 3 ist hohl ausgebildet und weist an ihrer in Figur 1 linken Axialseite einen Einlass 9 für Kühlmittel auf, das unter anderem ein Öl aufweisen kann. Ein zentraler Kühlkanal 10 erstreckt sich von dem Einlass 9 axial bis zum gegenüberliegenden geschlossenen Ende der Rotorwelle 3. Der Kühlkanal 10 ist Bestandteil eines Kühlmittelkreislaufs, in dem das Kühlmittel zirkuliert.

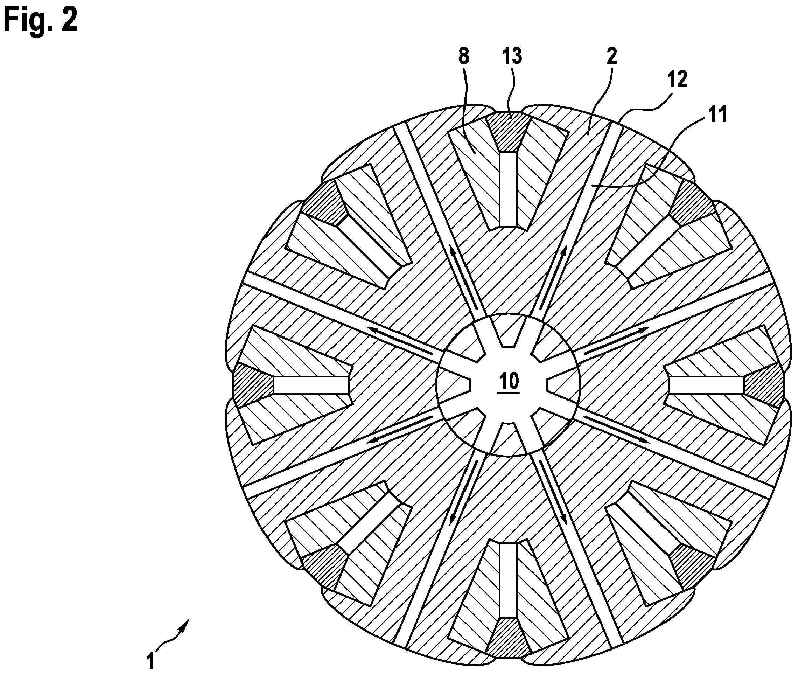

In der Nähe des in Figur 1 rechten Endes des zentralen Kühlkanals 10 erstreckt sich ein erster peripherer Kühlkanal 11 von der Rotorwelle 3 aus in der ersten Endplatte 4 radial nach außen. Figur 2 zeigt einen Schnitt entlang der Linie II-II von Figur 1. Man erkennt dort, dass in der ersten Endplatte 4 insgesamt acht derartige erste periphere Kühlkanäle 11 vorhanden sind, die ausgehend von dem zentralen Kühlkanal 10 sternförmig nach außen verlaufen. Die Kühlkanäle 11 erstrecken sich in den radialen Vorsprüngen 5 und damit in den Rotorwicklungen 8 bis zu radialen Auslässen 12.

In diesem Ausführungsbeispiel werden die peripheren Kühlkanäle 11 von der ersten Endplatte 4 allein gebildet. Alternativ dazu können derartige periphere Kühlkanäle von einer Endplatte und einem Blechpaket gemeinsam gebildet werden. Nach dem Passieren der Kühlkanäle 11 strömt das Kühlmittel radial aus den Auslässen 12. In Figur 2 ist auch erkennbar, dass zwischen den Rotorwicklungen 8 angeordnete Zwischenräume nach außen von Poltrennern 13 begrenzt beziehungsweise abgedeckt werden, auf die optional verzichtet werden kann.

An der dem Einlass 9 benachbarten, in Figur 1 linken Seite des zentralen Kühlkanals 10 erstreckt sich durch die zweite Endplatte 6 ein zweiter peripherer Kühlkanal 14 von der Rotorwelle 3 aus radial nach außen. Der zweite periphere Kühlkanal 14 ist parallel zu dem ersten peripheren Kühlkanal 11 angeordnet. Außerdem verlaufen dem zweiten peripheren Kühlkanal 14 entsprechende weitere zweite periphere Kühlkanäle 14 in der zweiten Endplatte 6 radial nach außen. Die zweiten peripheren Kühlkanäle 14 werden von der zweiten Endplatte 6 gebildet.

Die ersten peripheren Kühlkanäle 11 und die zweiten peripheren Kühlkanäle 14 sind gleichartig ausgebildet. In jeder Endplatte 4, 6 sind jeweils acht sternförmig nach außen verlaufende periphere Kühlkanäle 11, 14 vorhanden. Durch die ersten Kühlkanäle 11 und die zweiten Kühlkanäle 14 werden beide Endplatten 4, 6 von Kühlflüssigkeit durchströmt. Am Ende der peripheren Kühlkanäle 14 befindet sich jeweils ein Auslass 15, aus dem das Kühlmittel in radialer Richtung ausströmen kann.

Die erste Endplatte 4 ist durch eine Abdeckung 16 abgedeckt. Die zweite Endplatte 6 ist ebenfalls durch eine Abdeckung 17 abgedeckt. Beide Abdeckungen 16, 17 sind kappenförmig ausgebildet und weisen jeweils eine Durchgangsöffnung für die Rotorwelle 3 auf. Optional grenzen die Auslässe 12, 15 an die Abdeckungen 16, 17.

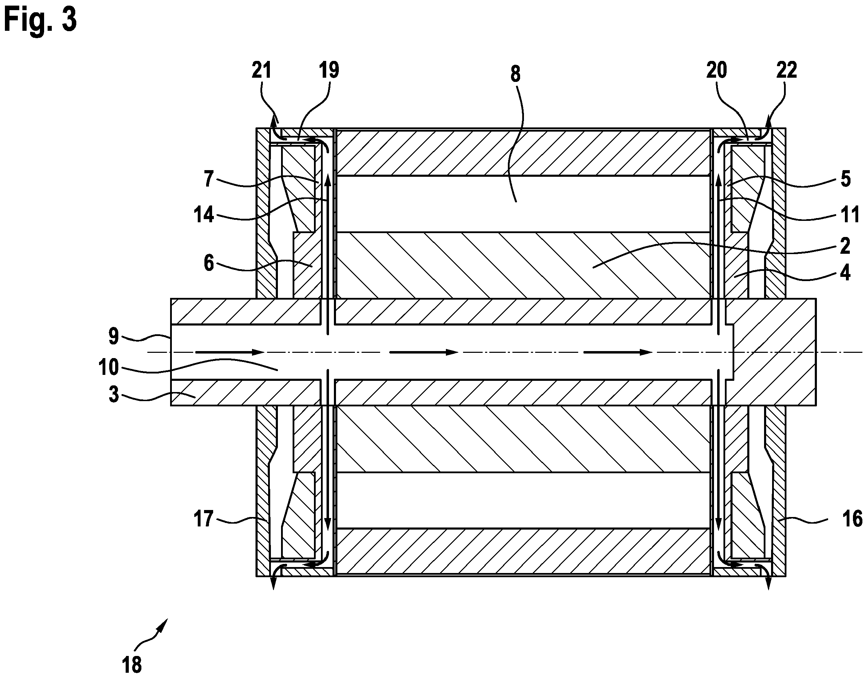

Figur 3 zeigt ein zweites Ausführungsbeispiel eines erfindungsgemäßen Rotors 18 in einer geschnittenen Seitenansicht. Diejenigen Komponenten, die mit Komponenten des ersten Ausführungsbeispiels übereinstimmen, werden nicht nochmals im Detail erläutert. In Übereinstimmung mit dem ersten Ausführungsbeispiel weist der Rotor 18 eine Rotorwelle 3, ein Blechpaket 2 und Rotorwicklungen 8 auf. Periphere, radiale Kühlkanäle 11, 14 verlaufen in den Endplatten 4, 6, welche durch Abdeckungen 16, 17 abgedeckt sind.

Abweichend zu dem vorangehenden Ausführungsbeispiel weisen die beiden Auslässe 21, 22 jeweils einen axial verlaufenden Abschnitt 19, 20 auf, der sich an einen peripheren Kühlkanal 11, 14 anschließt und in einer Abdeckung 16, 17 verläuft. Die axial verlaufenden Abschnitte 19, 20 bewirken, dass das Kühlmittel vor dem Austreten aus dem Rotor 18 in Axialrichtung umgelenkt wird und dadurch sowohl die Abdeckungen 16, 17 als auch Außenbereiche der Rotorwicklungen 8 kühlt.

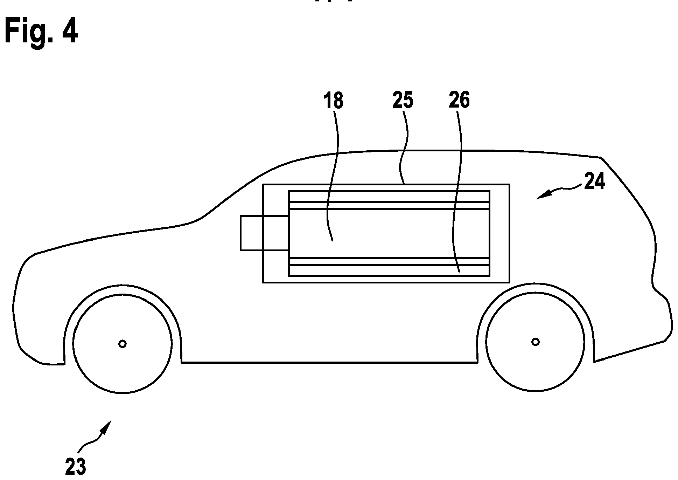

Figur 4 zeigt schematisch ein Fahrzeug 23 mit einer elektrischen Maschine 24, die zum Antreiben des Fahrzeugs 23 dient. Die elektrische Maschine 24 weist ein Gehäuse 25 auf, in dem der Rotor 18 und ein Stator 26 aufgenommen sind, der den Rotor 1 umgibt.

### Bezugszeichenliste

- 1: Rotor
- 2: Blechpaket
- 3: Rotorwelle
- 4: erste Endplatte
- 5: radialer Vorsprung
- 6: zweite Endplatte
- 7: radialer Vorsprung
- 8: Rotorwicklung
- 9: Einlass
- 10: zentraler Kühlkanal
- 11: erster Kühlkanal
- 12: Auslass
- 13: Poltrenner
- 14: zweiter Kühlkanal
- 15: Auslass
- 16: Abdeckung
- 17: Abdeckung
- 18: Rotor
- 19: Abschnitt
- 20: Abschnitt
- 21: Auslass
- 22: Auslass
- 23: Fahrzeug
- 24: elektrische Maschine
- 25: Gehäuse
- 26: Stator

## Patentansprüche

1. Rotor (1, 18) für eine elektrische Maschine (24), umfassend:
- eine Rotorwelle (3),
- ein auf der Rotorwelle (3) angeordnetes, aus gestapelten Elektroblechen gebildetes Blechpaket (2),
- eine an einer Axialseite des Blechpakets (2) angeordnete erste Endplatte (4) mit entlang ihres Umfanges angeordneten radialen Vorsprüngen (5),
- eine an der gegenüberliegenden Axialseite des Blechpakets (2) angeordnete zweite Endplatte (6) mit entlang ihres Umfanges angeordneten radialen Vorsprüngen (7),
- mehrere Rotorwicklungen (8), die jeweils um einen Vorsprung (5) der ersten Endplatte (4) und einen axial gegenüberliegenden Vorsprung (7) der zweiten Endplatte (6) gewunden sind,
- einen in der Rotorwelle (3) verlaufenden zentralen Kühlkanal (10) zum Zuführen eines Kühlmittels und
- einen in der ersten Endplatte (4) verlaufenden peripheren Kühlkanal (11), der sich von dem zentralen Kühlkanal (10) nach außen erstreckt.

2. Rotor nach Anspruch 1, wobei der periphere Kühlkanal (11) radial verläuft.

3. Rotor nach Anspruch 1 oder 2, wobei der periphere Kühlkanal (11) in einem Vorsprung des Blechpakets (2) verläuft.

4. Rotor nach einem der vorangehenden Ansprüche, wobei der periphere Kühlkanal (11) in einem am Umfang des Rotors (1, 18) angeordneten Auslass (12, 15, 21, 22) mündet.

5. Rotor nach Anspruch 4, wobei die erste Endplatte (4) axial mit einer Abdeckung (16) abgedeckt ist, in welcher der Auslass (21) angeordnet ist.

6. Rotor nach Anspruch 5, wobei der Auslass (21) einen axial verlaufenden Abschnitt (19) aufweist.

7. Rotor nach einem der vorangehenden Ansprüche, wobei der periphere Kühlkanal (11) von der ersten Endplatte (4) allein oder von der ersten Endplatte (4) und dem Blechpaket (2) gebildet ist.

8. Rotor nach einem der vorangehenden Ansprüche, wobei der periphere Kühlkanal (11, 14) kurvenförmig verläuft.

9. Rotor nach einem der vorangehenden Ansprüche, wobei parallel zu dem peripheren Kühlkanal (11) ein weiterer peripherer Kühlkanal in der ersten Endplatte (4) verläuft.

10. Rotor nach einem der vorangehenden Ansprüche, wobei in der zweiten Endplatte (6) ein weiterer peripherer Kühlkanal (14) verläuft, der sich von dem zentralen Kühlkanal (10) nach außen erstreckt.

11. Rotor nach einem der vorangehenden Ansprüche, wobei die erste Endplatte (4) und/oder die zweite Endplatte (6) jeweils eine Metalllegierung, vorzugsweise eine Aluminiumlegierung, aufweisen.

12. Elektrische Maschine (24), mit einem Rotor (1, 18) nach einem der Ansprüche 1 bis 11 und einem Stator (26).

13. Fahrzeug (23) mit einer elektrischen Maschine (24) nach Anspruch 12, die zum Antreiben des Fahrzeugs (23) vorgesehen ist.
